# EUROPEAN PATENT SPECIFICATION

(11) **EP 2 923 775 B1**
(45) Date of publication and mention of the grant of the patent: **08.07.2020**
(21) Application number: 14161849.6
(22) Date of filing: 26.03.2014
(51) Int. Cl.: B07C 3/14, G06K 9/03, G06K 9/20, G06K 9/72, G06K 9/00

(54) **Postal Sorting System**
Postsortiersystem
Système de Tri Postal

(43) Date of publication of application: 30.09.2015
(73) Proprietor: NEC Corporation, Minato-ku, Tokyo 108-8001 (JP)
(72) Inventor: Adachi, Tadashi, Tokyo (JP)
(74) Representative: Plasseraud IP

(56) References cited:
- EP-A2- 0 938 057
- JP-A- H1 196 295
- US-A1- 2010 232 642
- US-B2- 6 768 810

## Description

### BACKGROUND OF THE INVENTION

### Field of the Invention

The present invention relates to a postal optical character recognition device, a postal item processing system, a postal optical character recognition method, and a program in processing that classifies postal items.

### Description of Related Art

For the sorting of postal items according to delivery destination, optical character recognition (OCR) is often used. In the case of an OCR device that is used for mail, first, the position of the name and address of a destination are specified from an image of the destination field of a postal item. Next, the postal OCR device reads the character strings of the name and address in the manner of an ordinary OCR device. Then, the postal OCR device performs processing that extracts a sorting code from the character strings in order to sort to each delivery region by a sorting machine. At this time, the postal OCR device refers to a table that associates address character strings and sort codes. Hereinbelow, this table shall be called a postal address database. In the process of extracting this sort code, failures may occur in the extraction of sort codes. There are numerous reasons why a postal OCR device may not be able to specify a sort code. One of the major reasons involves deficiencies of the postal address database. In the case of the address that is given on a postal item not being stored in the postal address database, the postal OCR device is not capable of extracting the sort code, and so sends the image of the destination field of that postal item to video keying. Video keying refers to the activity of an operator inputting via a keyboard (keying) the address that is given in that image and the sort code corresponding thereto while viewing the image of the destination field that is displayed in a monitor of a terminal device. When there are a lot of postal items for which this video keying is required, the work efficiency worsens.

Also, in addition to ordinary mail that is posted in mailboxes, postal matter also includes bulk mailings in which companies send out mail in large quantities to customers for the purpose of advertisements and the like. Bulk mailing refers to postal matter in which a sender that has a large number of delivery destinations prints a large number of destination labels with a customer list and printing equipment that the sender owns, affixes the labels and sends at a post office. In the event of this kind of bulk mail being routed to video keying due to the address not being readable by the OCR, when the same bulk sender again sends the same postal matter, since the aspect of the destination address in the image is considered to be the same as the previous time, the OCR will not be able to read just as it could not before. In that case, it is routed to the video keying, where the same keying processing must be performed. Also, since the quantity of postal matter due to bulk mail is vastly greater than the quantity of ordinary mail, in the event of the addresses that are routed to video keying being numerous in bulk mail, the burden on the operator will increase further.

With respect to this problem, for example Japanese Unexamined Patent Application, First Publication (JP-A) No. 2011-232868 discloses a method of specifying a destination address that cannot be read by a postal OCR device. The method disclosed in JP-A No. 2011-232868 uses a logo or advertisement that is printed on the periphery of the destination field of a letter to be sent by the bulk sender for identification of the bulk sender. Also, this method uses the characteristic of, in the case of there having previously been a mailing from the same bulk sender, the collection of addresses to which the mailing is made is nearly the same each time. With this method, a database that records in a paired manner image information of addresses that cannot be read by the postal OCR device and address data after keying by the operator is created for each bulk sender. Also, it creates a database that associates the image feature values of the logos or advertisements printed on the periphery of the destination fields and the bulk senders. Then, the next time there is a mailing from the same bulk sender, it identifies the bulk sender from the image feature value such as the logo. Then, for addresses that cannot be read by the postal OCR device, it refers to the database that was created for each bulk sender, and sets as the destination of the letter the address data that has been recorded paired with an image in which the degree of similarity with the image of the destination address is high.

In newly developed areas and the like, it is common for old addresses to be abolished and new addresses to be assigned to newly partitioned locations. In that case, situations arise in which updating or registration of the postal address database is not carried out in time. This kind of postal address database of a country or region thus lacks comprehensiveness in terms of addresses. Specifically, although address registration until the zip code, city name, and street name may be complete, registration of further address elements, such as house number and door number, is often lacking.

Also, in addition the above cases, only address data and sort codes are stored in postal address databases used in most countries and regions, with there being few cases of name data being stored. This is because in the event of multiple people existing at a single address, correctly researching and storing to the extent of name data requires extremely substantial maintenance resources. Accordingly, although a postal OCR device ordinarily has a text recognition function for reading not only address strings but also name strings, in relation to individual names, since there is no data to check the correctness of the read result, it is often not utilized for actual sorting.

In the case of using an address database in which house numbers and door numbers are not registered, even if for example recognition of every character by optical character recognition were to be enabled, the postal OCR device would not be able to find the target address with the address character string that was read. Also, even if it read the character string of the destination name at that time, since there is no name data against which to be cross-checked in the postal address database, it cannot be utilized as a complementary means. Accordingly, the number of instances of routing to video keying those addresses that cannot be identified by the postal OCR device increases.

In such cases, the operator, depending on previous knowledge and experience, keys a suitable address for which a sort code can be extracted, or in the case of not being able to key a suitable address, performs reject keying that is carried out when a sort code cannot be specified. In either case, the keying that was performed at that time will not be fed back the next time a postal item with the same destination is mailed, and so the same keying will again need to be repeated. Note that with respect to this problem, the method disclosed in JP-ANo. 2011-232868 is effective in the case of image information that can identify a bulk sender being printed in the vicinity of the destination column of a letter, but the same keying must be repeated for postal items with the same destination when such is not the case.

### SUMMARY OF THE INVENTION

postal optical character recognition devicepostal item processing systempostal optical character recognition methodpostal optical character recognition devicepostal item processing systempostal optical character recognition methodpostal optical character recognition device

The present invention aims at a postal optical character recognition device according to claim 1. Embodiment of the device is recited in claim 2. The present invention also aims at a postal item processing system according to claim 3, a postal optical character recognition method according to claim 4, and a computer program product according to claim 5.

### BRIEF DESCRIPTION OF THE DRAWINGS

FIG. 1 is a block diagram that shows the minimum constitution of the postal optical character recognition device according to the first exemplary embodiment of the present invention.
FIG. 2 is a block diagram that shows an example of the constitution of the postal optical character recognition device according to the first exemplary embodiment of the present invention.
FIG. 3 is a drawing that shows an example of destination information that is read by the postal optical character recognition device according to the first exemplary embodiment of the present invention.
FIG. 4 is a first drawing for describing the collation data used by the postal optical character recognition device according to the first exemplary embodiment of the present invention.
FIG. 5 is a second drawing for describing the collation data used by the postal optical character recognition device according to the first exemplary embodiment of the present invention.
FIG. 6 is a first drawing that shows the processing flow of the postal optical character recognition device according to the first exemplary embodiment of the present invention.
FIG. 7 is a second drawing that shows the processing flow of the postal optical character recognition device according to the first exemplary embodiment of the present invention.
FIG. 8 is a third drawing that shows the processing flow of the postal optical character recognition device according to the first exemplary embodiment of the present invention.
FIG. 9 is a drawing that shows an example of the postal item processing system according to the second exemplary embodiment of the present invention.

### EXAMPLARY EMBODIMENTS FOR CARRYING OUT THE INVENTION

### (First Embodiment)

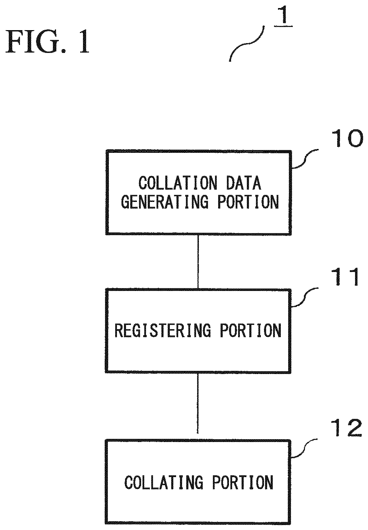

Hereinbelow, a postal optical character recognition device according to one exemplary embodiment of the present invention shall be described referring to FIG. 1 to FIG. 8.

FIG. 1 is a drawing that shows the minimum constitution of the postal optical character recognition device according to the first exemplary embodiment.

In this drawing, reference numeral 1 denotes the postal optical character recognition device. As shown in FIG. 1, the postal optical character recognition device 1 is provided with at least a collation data generating portion 10, a registering portion 11, and a collating portion 12.

The collation data generating portion 10 generates collation data from image data in which destination information of a postal item is included. The collation data is identifier information that shows a graphical characteristic of the destination image, and uniquely identifies that destination image. The graphical characteristic shall be described below. The collation data generating portion 10 has a function that performs image processing such as binarization processing or performs character recognition processing by optical character recognition in order to generate collation data.

The registering portion 11 registers with a storage portion 13 described below, in an associated manner, the collation data acquired from the collation data generating portion 10 and a sort code acquired from a video keying system.

The collating portion 12 acquires the collation data, and acquires and outputs the sort code corresponding to the collation data from the storage portion 13 described below.

The postal optical character recognition device 1, in the case of not being able to acquire a sort code that indicates the delivery region (address sorting information) from a postal database, generates collation data, and registers it in association with a sort code. Also, in the case of a postal item with the same destination being sent once again, the postal optical character recognition device 1 generates the collation data, and acquires and outputs the previously registered sort code.

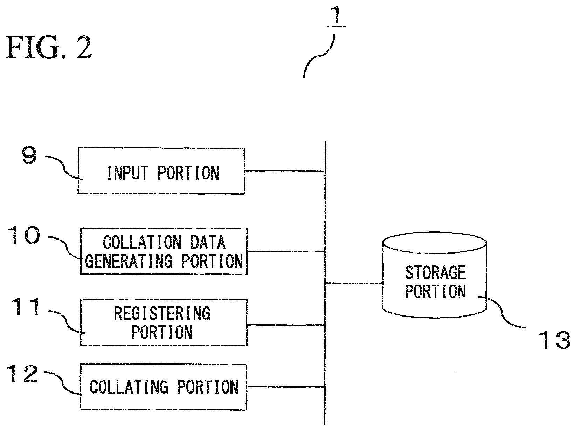

FIG. 2 is a block diagram that shows an example of the constitution of the postal optical character recognition device 1 according to the first exemplary embodiment.

As shown in FIG. 2, the postal optical character recognition device 1 is provided with an input portion 9, a collation data generating portion 10, a registering portion 11, a collating portion 12, and a storage portion 13. The postal optical character recognition device 1 is a computer that is for example provided with a central processing unit (CPU). The postal optical character recognition device 1 is a device that reads address character strings by an OCR from the destination image of a postal item, and when it is unable to acquire a sort code from the postal address database, is used for specifying the sort code.

The input portion 9 acquires an image generated by an image scanner or the like, with the image including the region where the destination of a postal item is given, and outputs it to the collation data generating portion 10.

The input portion 9, the collation data generating portion 10, the registering portion 11, and the collating portion 12 are functions that a CPU built into the postal optical character recognition device 1 is provided with by executing programs.

The storage portion 13 is a database. The storage portion 13 stores collation data and sort codes in an associated manner.

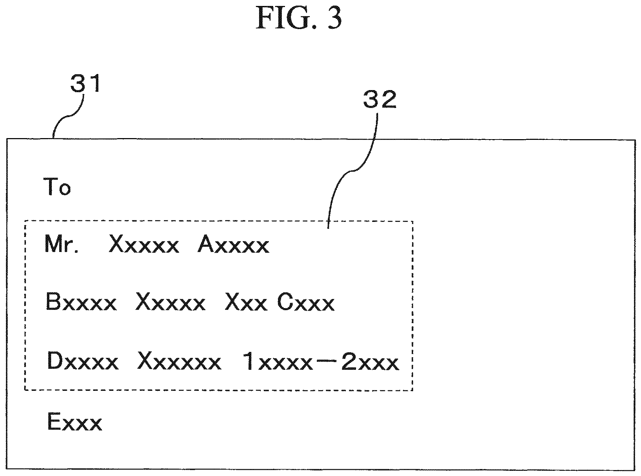

FIG. 3 is a drawing that shows an example of destination information that is read by the postal optical character recognition device according to the first exemplary embodiment of the present invention.

Hereinbelow, a description of the destination recognition processing of the present exemplary embodiment shall be described, with the destination that is given in the format as shown in FIG. 3 serving as an example.

The reference numeral 31 denotes an image that includes the destination information of a postal item. The collation data generating portion 10 specifies by a predetermined method a region where the destination address is given, in the image that the input portion 9 has acquired. The destination image 31 is the region that the collation data generating portion 10 has specified. Next, the collation data generating portion 10 cuts out the specified region line by line, and extracts the lines where the address and name of the destination are given. As an example, in the present exemplary embodiment, the extraction targets three lines, with the line in which the name is given being the uppermost line.

First, the collation data generating portion 10 segments each line into word units. Specifically, the address and name character strings of each line are constituted from letters and numerals, and the collation data generating portion 10 utilizes a separator between the words and number strings in each line to separate them into individual words. The separator is for example a space or a hyphen that is included in the address character string. Next, the collation data generating portion 10 sets as a marker whether or not titles such as "Mr." or "Ms" are included among the segmented words, and determines the line in which such words are included to be the line of reference. Then, the collation data generating portion 10 specifies three lines, with this line that is the reference being the uppermost line.

The reference numeral 32 shows the three lines that have been extracted in the above manner. Note that the number of lines being three is merely an example, and there may be other numbers of lines depending on the address and name that are given in the destination column of that country or region.

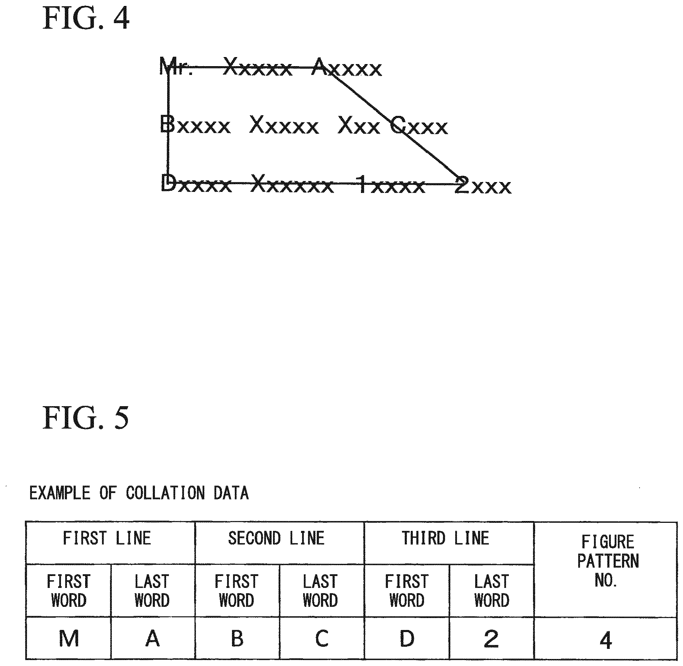

FIG. 4 is a first drawing for describing the collation data that is used by the postal optical character recognition device according to the first exemplary embodiment of the present invention.

FIG. 4 shows the three lines that the collation data generating portion 10 extracted as a processing target, as described in FIG. 3. Using FIG. 4, an outline of the process of the collation data generating portion 10 generating collation data shall be described.

The collation data generating portion 10, upon extracting the three lines, next selects the first word and the last word of each of the three lines. In the example of FIG. 4, the first world of the first line is "Mr.", and the last word is "Axxxx". Similarly, the collation data generating portion 10 selects "Bxxxx" and "Cxxxx" from the second line, and "Dxxxx" and "2xxx" from the third line. The reason for selecting the first word and last word is that the positions at which those words are arranged express the approximate contour of the figure that the three lines of address character strings form.

Next, the collation data generating portion 10 moreover selects the first character from each word that has been selected. This is because, when segmenting character by character from the beginning of a word, because segmenting is performed from the beginning of the word, the first character has the highest segmentation success rate, and so the reliability as a character is considered to be high. Also, the possibility of the first character of the word being an upper-case letter is high, and since an upper-case letter has a greater surface area than a lower-case letter, the recognition rate of the letter is envisaged to be high. In this manner, the collation data generating portion 10 selects a total of six characters from the three lines. Also, the collation data generating portion 10 obtains the arrangement of the six characters from the position information of the six characters that have been selected. The collation data generating portion 10 finds the coordinate information of a predetermined point in each of the selected six characters, and visually classifies the figure formed by joining those points into a simplistic shape pattern. The predetermined point may for example be a point that is positioned near the center of each character. Example figures formed by the six points being joined together include a rectangle, a trapezoid, a mortar shape, and a six-sided polygon. In the case of FIG. 4, the figure formed by connecting the six points falls into the classification of a trapezoid.

FIG. 5 is a second diagram for describing the collation data that is used by the postal optical character recognition device according to the first exemplary embodiment of the present invention.

The collation data generating portion 10 generates collation data using information of the six characters described in FIG. 4, and information of the figure that is formed by connecting the six points. The collation data generating portion 10 assigns a pattern number to the classified figure pattern, and summarizes the destination address into seven data items consisting of the six characters and the one figure pattern number. This summarized data is the collation data. Using the example described in FIG. 3 and FIG. 4, the seven data items are "M", "A", "B", "C", "D", "2", and "4". Note that the figure pattern number of a trapezoid is "4".

The collating portion 12, using the collation data that the collation data generating portion 10 has generated in this manner, performs collation of an address code corresponding to the destination address.

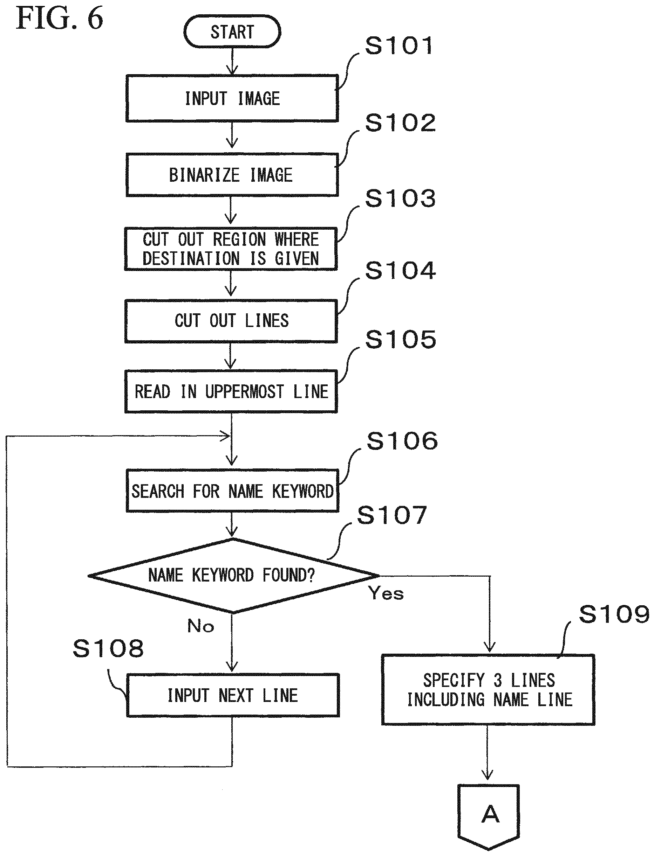

FIG. 6 is a first diagram that shows the process flow of the postal optical character recognition device according to the first exemplary embodiment of the present invention.

The process of generating the aforementioned collation data shall be described using the process flow of FIG. 6.

This process is the process for the situation of reading an address by optical character recognition from the destination image of a postal item, and not being able to obtain a sort code even by referring to the postal address database.

First, the input portion 9 inputs an image that includes the destination information from an image scanner device or the like, and outputs it to the collation data generating portion 10 (Step S101). Next, the collation data generating portion 10 performs binarization processing on the image that was acquired (Step S102).

Next, the collation data generating portion 10 performs a process of cutting out the region in which the destination address and the name are given, from the image on which the binarization processing was performed (Step S103). For example, a density histogram is obtained from the binarized image. Then, a general identification method is used such as detecting the X, Y coordinates of regions where the density in the image is higher than a predetermined threshold, and having those positions serve as regions where the destination is given.

Next, the collation data generating portion 10 performs on the cut-out region a process of segmenting the character strings into line units (Step S104). Recognition of lines may be performed based on the densities in the image, similarly to Step S103. Normally, since printed postal addresses are usually printed over several lines, recognition is performed by segmenting the destination character string line by line. Next, the collation data generating portion 10 reads in the image of the uppermost line among the segmented lines as a processing object (Step S105). Next, the collation data generating portion 10 searches for whether there is a name keyword in the line that was read in (Step S106). In this process, the collation data generating portion 10 performs a character recognition process by optical character recognition on the one line that was read in, and determines whether or not a name keyword (title) such as "Mr." or "Ms" is included in the recognized character strings.

In the case of not being able to retrieve a name keyword (Step S107 = No), the collation data generating portion 10 reads in the line below (next line) as the processing object (Step S108), and repeats the process from Step S106 until a name keyword is found.

In the case of a name keyword being retrieved (Step S107 = Yes), the collation data generating portion 10 specifies a total of three lines consisting of the line in which the name keyword was retrieved and the two lines below that line as the processing target (Step S109). Specifying for example means recording the coordinate information that stipulates each line in temporary memory or the like.

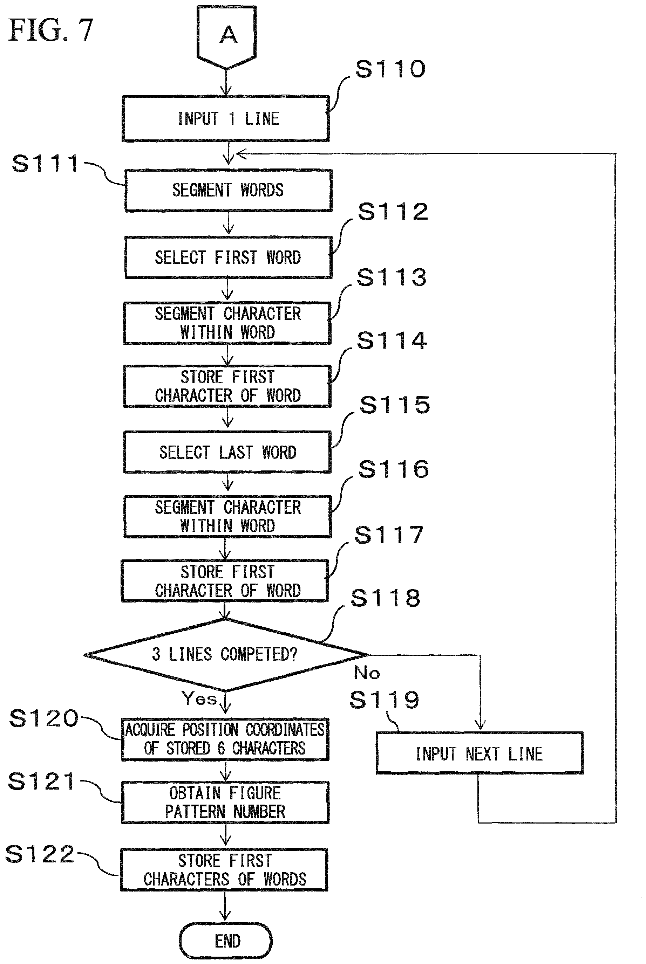

The subsequent processing shall be described using FIG. 7.

FIG. 7 is a second diagram that shows the process flow of the postal optical character recognition device according to the first exemplary embodiment of the present invention.

The process of generating collation data shall be described using the process flow of FIG. 7.

The collation data generating portion 10, upon executing the process of Step S109, reads in the image of the uppermost line of the three lines as a process object (Step S110). Next, the collation data generating portion 10 segments the character string included in the image that has been read in (Step Sill). For example, in the case of there being a space of a predetermined width greater than the gap between characters, the collation data generating portion 10 judges it to be a word separator, and may perform segmentation of words. The collation data generating portion 10 associates the segmented word with the position of that word, or the sequence in which that word appears when counting from the left of the character string.

Next, the collation data generating portion 10 selects the first word from among the segmented words (Step S112). The first word is the word positioned to the leftmost side of the line. The collation data generating portion 10, using information such as the positions of words that have previously been associated with the words, selects the first word.

Next, the collation data generating portion 10 segments the first character of the first word that has been selected (Step S113). For example, the collation data generating portion 10 judges the separation of two characters from the density of the binarized image. Then, the collation data generating portion 10 performs character recognition of the segmented character image by optical character recognition, and upon being recognized as a character, determines that character to be the first character. Next, the collation data generating portion 10 sets the segmented first character as the first character of the first word of the first line, and stores it in the storage portion 13 (Step S114).

Next, the collation data generating portion 10 performs the same processes as Step S112 to S114 on the last word. That is to say, the collation data generating portion 10 selects the last word of the first line (Step S115). The collation data generating portion 10 segments the first character of the last word (Step S116), and stores the first character in the storage portion 13 (Step S117).

Upon having performed the process of extracting and storing the respective first characters of the first and last words in the one line that was read in, the collation data generating portion 10 judges whether or not this process has been performed for the three lines specified as the process target (S118). In the case of the process not being completed for the three lines (Step S118 = No), the collation data generating portion 10 reads in the image of the next line (Step S119), and repeats the process from Step Sill. In the case of the process having been completed for the specified three lines (Step S118 = Yes), the process proceeds to Step S120.

The collation data generating portion 10 acquires coordinate information of the predetermined position of each of the stored six characters (Step S120). Next, the collation data generating portion 10 recognizes a figure pattern that these six points form, from the positional relationship of the acquired six coordinates. Then, the collation data generating portion 10 compares the recognized figure pattern with each figure of a figure pattern group defined in advance using a general method such as template matching. The collation data generating portion 10 selects the closest resembling figure pattern from among the figure pattern group, and obtains a figure pattern number that is assigned to that figure pattern (Step S121). Finally, the collation data generating portion 10 outputs the six characters stored in the storage portion 13 and the figure pattern number together as collation data (Step S122). Thereby, the process flow ends.

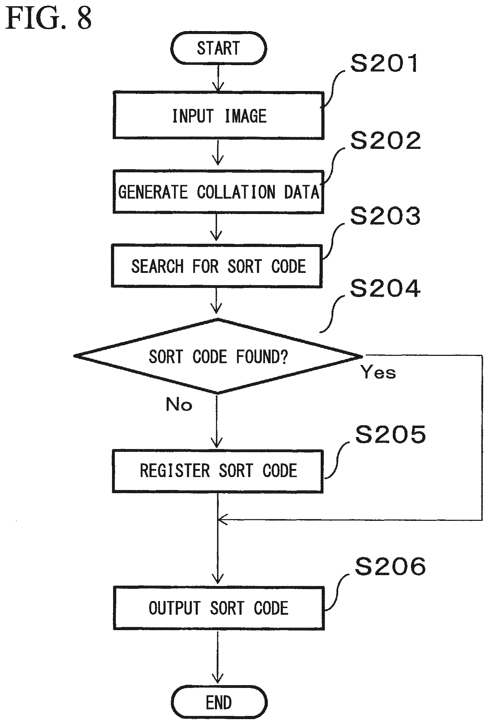

FIG. 8 is a third diagram that shows the process flow of the postal optical character recognition device according to the first exemplary embodiment of the present invention.

The process of the postal optical character recognition device 1 determining a sort code shall be described using the process flow of FIG. 8.

First, the input portion 9 inputs an image that includes the destination information of a postal item for which the sort code could not be acquired (Step S201). Next, the input portion 9 outputs that image to the collation data generating portion 10. The collation data generating portion 10 generates collation data (Step S202). The collation data generating portion 10 outputs the generated collation data and the image obtained from the input portion 9 to the collating portion 12. The collating portion 12 searches a table that associates collation data and sort codes that the storage portion 13 stores, with the collation data serving as a key (Step S203). The collating portion 12 judges whether or not a sort code as been acquired (Step S204). In the case of being able to retrieve a sort code, the process proceeds to Step S206. In the case of not being able to retrieve a sort code, the collating portion 12 transmits the collation data and the image to the video keying system. In the video keying system, an operator sets sort data corresponding to that collation data, and the video keying system transmits to the registering portion 11 the collation data and the sort code that has been set. The registering portion 11 registers the received collation data and the sort code in the storage portion 13 in an associated manner (Step S205). The registering portion 11 outputs the collation data to the collating portion 12 after registration. The collating portion 12 outputs the sort code (Step S206).

According to the present exemplary embodiment, by registering the collation data and the sort code that corresponds to it, there is no need to repeatedly perform video keying for postal items with the same destination for which a sort code cannot be acquired.

Also, even in the case of the character recognition rate of OCR being extremely high (for example, 99%), when attempting to read all of a long character string such as an address without errors, the probability of being able to read it without even a single character being wrong is low. For example, if there are a total of 20 characters in the destination address and name, the probability of all the characters matching falls to 99% to the power of 20 times, that is, around 80%. Accordingly, when comparing a match comparison with a character string that is generated by performing character recognition by OCR from an image that includes the destination information of a postal item, it cannot be expected that all characters will match with a high accuracy.

However, according to the present exemplary embodiment, matching comparison is performed by collation data that combines the graphic characteristic that is formed by the contour of the destination address character string over multiple lines and the first character whose recognition with high accuracy can be expected. Thereby, it is possible to retrieve a registered sort code with a higher probability than performing retrieval based on all characters matching using character strings generated by optical character recognition. If this collation data is used, the next time that a postal item with the same destination again arrives, for a destination with which a sort code has been registered in the storage portion 13 by being once routed to video keying, the possibility of it being searched and retrieved increase, and so the need to repeatedly perform the same keying by video keying for that destination is eliminated.

In particular, with regard to postal items that a bulk sender sends out, the way in which the printing of addresses is carried out can be presumed to be the same each time since it is considered to depend on the address list that the bulk sender possesses and the address printing environment. In such a case, there is a high possibility that the collation data which the collation data generating portion 10 generates being identical for postal items sent to the same destinations by the same bulk sender. Accordingly, the present exemplary embodiment is effective for postal items that are sent by a bulk sender that repeatedly sends out postal items with a destination name and address having the same graphic characteristic, and so it is possible to save labor on video keying.

### (Second Embodiment)

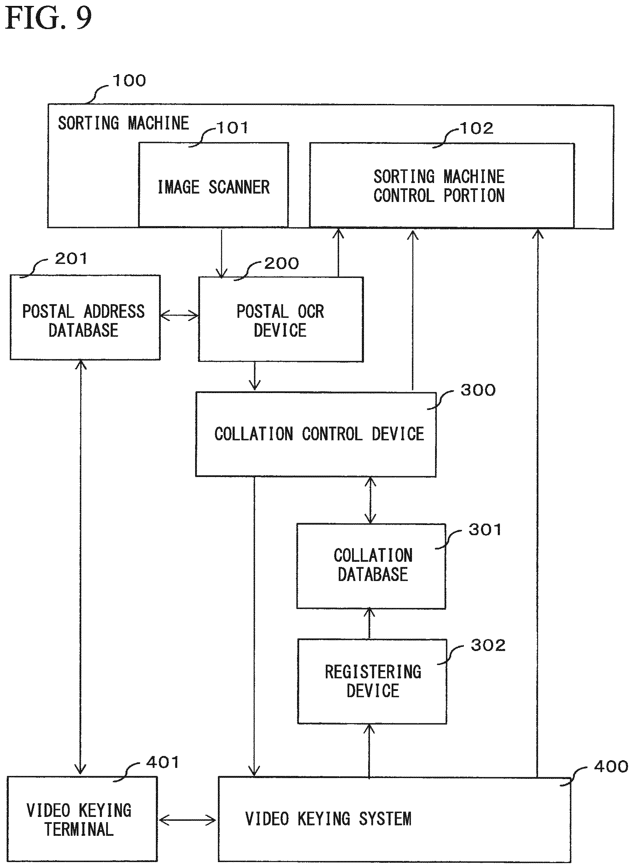

Hereinbelow, the postal item processing system according to the second exemplary embodiment of the present invention shall be described referring to FIG. 9.

FIG. 9 is a drawing that shows an example of the postal item processing system according to the second exemplary embodiment of the present invention.

The postal item processing system of the present exemplary embodiment as shown in FIG. 9 is provided with a sorting machine 100, a postal OCR device 200, a postal address database 201, a collation control device 300, a collation database 301, a registering device 302, a video keying system 400, and a video keying terminal 401.

The sorting machine 100 is a device that distributes mail to each delivery region. The sorting machine 100 has an image scanner 101 that scans the region where the destination information of a postal item is given, and generates an image that includes the destination information, and a sorting machine control portion 102 that acquires the sort code for each postal item and performs sorting of the postal item.

The postal OCR device 200 acquires an image that includes the destination information of a postal item from the image scanner 101, and generates an address character string by optical character recognition. Then, the postal OCR device 200 refers to a postal address database 201 using the generated address character string, and extracts the sort code of the postal item. Also, the postal OCR device 200, in the case of failing at the reading of an address, generates collation data. The postal OCR device 200 has the input portion 9 and the collation data generating portion 10 in the first exemplary embodiment.

The postal address database 201 is a database that stores address character strings of postal destinations, and corresponding sort codes.

The collation control device 300 is a device that, in the case of the postal OCR device 200 not being able to determine the sort code, refers to the collation database 301 using the collation data, and determines the sort code. The collation control device 300 has the collating portion 12 in the first exemplary embodiment. The collation database 301 is one example of the storage portion 13 in the first exemplary embodiment.

In the case of the collation control device 300 having failed at determination of the sort code, the video keying system 400 transmits to the video keying terminal 401 an image that includes the destination information received from the collation control device 300. The video keying system 400 transmits to the sorting machine control portion 102 the sort code received from the video keying terminal 401, or a code of the result of reject keying. Reject keying is an operation that the operator performs when a sort code cannot be extracted.

The video keying terminal 401 is a special-purpose terminal device that the operator uses for performing video keying. Using the video keying terminal 401, the operator performs keying of the destination address or sort code, or reject keying. The video keying terminal 401 transmits the keying result to the video keying system 400.

The registering device 302 is a device that receives the collation data and keying result (sort code or result of the reject keying) from the video keying system 400, and stores it in the collation database 301. The registering device 302 has the registering portion 11 in the first exemplary embodiment.

Next, an example of the operation of the postal item processing system shall be described.

When a postal item is supplied to the sorting machine 100, the image scanner 101 generates an image of the destination column of that postal item, and transmits it to the postal OCR device 200. The postal OCR device 200 reads the address character strings of the postal destination from the received image, and acquires a sort code by referring to the postal address database 201. The postal OCR device 200 transmits the obtained sort code to the sorting machine control portion 102. However, in the case of not being able to acquire a sort code even by referring to the postal address database 201 due to deficiencies in the database, the postal OCR device 200 generates collation data from the acquired image, and transmits it to the collation control device 300 together with the image of the destination column. The method of generating the collation data is as already described using FIG. 6 and FIG. 7.

Next, the collation control device 300 searches the collation database 301 using the collation data, and if the collation data matches, transmits the corresponding sort code to the sorting machine control portion 102. If there is no match, the collation control device 300 transmits the image of the destination column to the video keying system 400. The video keying system 400 transmits the image of the destination column to the video keying terminal 401. The video keying terminal 401 displays the image it has received in the monitor. The operator keys in the address character string while viewing the image that is displayed. The video keying terminal 401 then refers to the postal address database 201 using that address character string, and acquires a sort code. Also, in the case of not being able to acquire a sort code due to deficiencies in the postal address database 201, the video keying terminal 401 acquires a reject keying result that indicates that a sort code could not be acquired. The video keying terminal 401 transmits these keying results to the video keying system 400.

The video keying system 400 transmits the keying result to the sorting machine control portion 102. Moreover, the video keying system 400 transmits the collation data to the registering device 302 together with the keying result. The registering device 302 stores the collation data and the keying result in the collation database 301. Thereby, in the case of a postal item having arrived on which the same destination address is printed as the destination for which the sort code could not be determined by the postal OCR device 200, a match will occur in the collation of the collation control device 300, and so it is possible to automatically sort that postal item without repeating the same video keying.

Note that since mail items also include mail items not sent by bulk senders, in order to avoid having the destination collation data of postal items that are not likely to repeatedly come continue to remain in the collation database 301, a remaining moratorium period for registered collation data to remain (for example, two months) may be provided. The reason for this is that, since the repetition period in which a bulk sender periodically does bulk mailing is considered to be monthly at the shortest, it should have a standby moratorium of a period of at least one month. If there is a data match leading to keystrokes being saved within a two-month period, the remaining moratorium period for the collation data to remain is again extended. Conversely, collation data that is not referenced and matched within the remaining moratorium period is deleted from the collation database. Doing so prevents the collation database from becoming excessively large. For example, the registering device 302 periodically checks the period that data has remained registered, and deletes data that has exceeded the remainder moratorium period.

The postal item processing system of the present exemplary embodiment automatically outputs, to a postal sorting machine that has a postal OCR device and a video keying system, a sort code that has in the past been keyed in without performing video keying for a postal item of a bulk sender for which video keying needs to be carried out even if an OCR reads the character strings, due to deficiencies in the postal address database. Thereby, it is possible to reduce the number of instances of video keying, and therefore save operations by the operator.

Note that the postal optical character recognition device 1 described above has a computer inside. Also, the process of each of the processes of the aforementioned postal optical character recognition device 1 is stored on a computer-readable storage medium in the form of a program, and by a computer reading and executing this program, the processes are performed. Here, a computer-readable storage medium is a magnetic disc, an optical magnetic disc, a CD-ROM, a DVD-ROM, a semiconductor memory, and the like. Also, this computer program may be distributed to computers over communication lines, and a computer that has received this distribution may execute the program.

Also, the aforementioned program may be one for realizing a portion of the above-described functions. It may also be a so-called differential file (differential program), which can implement the functions discussed above in combination with a program already stored in the computer system.

## Claims

1. A postal optical character recognition device comprising:
a collation data generating portion configured to acquire an image including information of a destination address; to read in character strings from the image with a predetermined marker serving as a reference and extract a plurality of lines that those character strings show; and to generate collation data that is identifier information showing a graphical characteristic of the destination address included in the image using characters at predetermined positions in each line and position information of each of the predetermined positions in each line;
a collating portion configured to use the collation data to look up address sorting information corresponding to the collation data, and in the case of having found it, to read out the address sorting information and output it; and
a registering portion configured to, in the case of not finding the address sorting information, register the collation data that the collation data generating portion has generated and address sorting information corresponding to the destination information included in the image in a corresponding manner,
and wherein the collation data generating portion (10) is configured to:
- select the first word and the last word of each line of the lines of a text,
- select the first character of each of said selected word,
- find coordinate information of a predetermined point in each of the selected characters,
and
- classify the figure formed by joining said predetermined points into a shape pattern defining said graphical characteristic.

2. The postal optical character recognition device according to claim 1, wherein the predetermined marker is a title of a name of the destination.

3. A postal item processing system comprising:
a sorting machine configured to distribute postal items to each delivery region;
an image scanner device configured to generate an image of the region where the destination of the postal item is given;
a postal address database configured to store address character strings and address sorting information in a corresponding manner; and
a postal optical character recognition device according to claim 1 or 2.

4. A postal optical character recognition method comprising:
acquiring an image including information of a destination address; reading in character strings from the image with a predetermined marker serving as a reference and extracting a plurality of lines that those character strings show; and generating collation data that is identifier information showing a graphical characteristic of the destination address included in the image using characters at predetermined positions in each line and position information of each of the predetermined positions in each line;
using the collation data to look up address sorting information corresponding to the collation data, and in the case of having found it, reads out the address sorting information and outputs it; and
in the case of not finding the address sorting information, registers the generated collation data and address sorting information corresponding to the destination information included in the image in a corresponding manner,
and wherein the method comprises:
- selecting the first word and the last word of each line of the lines of a text,
- selecting the first character of each of said selected word,
- finding coordinate information of a predetermined point in each of the selected characters, and
- classifying a figure formed by joining said predetermined points into a shape pattern defining said graphical characteristic.

5. A computer program product comprising instructions for performing the method of claim 4, when run by a computer.

## Patentansprüche

1. Postalische optische Zeichenerkennungsvorrichtung aufweisend:
einen Kollationsdatenerzeugungsabschnitt, der konfiguriert ist, ein Bild zu erfassen, das Information einer Zieladresse enthält; Zeichenfolgen aus dem Bild mit einem vorgegebenen Marker, der als eine Referenz dient, einzulesen und mehrere Zeilen zu extrahieren, die diese Zeichenfolgen zeigen; und Kollationsdaten, die Identifizierungsinformation sind, die ein in dem Bild enthaltenes graphisches Merkmal der Zieladresse zeigt, unter Verwendung von Zeichen an vorgegebenen Positionen in jeder Zeile und Positionsinformation jeder der vorgegebenen Positionen in jeder Zeile zu erzeugen;
einen Kollationsabschnitt, der konfiguriert ist, die Kollationsdaten zu verwenden, um nach Adresssortierinformation, die den Kollationsdaten entspricht, zu suchen, und in dem Fall, dass sie gefunden wird, die Adresssortierungsinformation auszulesen und auszugeben; und
einen Registrierungsabschnitt, der konfiguriert ist, in dem Fall, dass die Adresssortierungsinformation nicht gefunden wird, die Kollationsdaten, die der Kollationsdatenerzeugungsabschnitt erzeugt hat, und Adresssortierungsinformation, die der in dem Bild enthaltenen Zielinformation entspricht, auf eine entsprechenden Weise zu registrieren,
und wobei der Kollationsdatenerzeugungsabschnitt (10) konfiguriert ist, um:
- das erste Wort und das letzte Wort jeder Zeile der Zeilen eines Textes zu wählen,
- das erste Zeichen jedes der gewählten Wörter zu wählen,
- Koordinateninformation eines vorgegebenen Punkts in jedem der gewählten Zeichen zu finden, und
- die durch Verbinden der vorgegebenen Punkte zu einem Gestaltmuster gebildete Figur, die das graphische Merkmal definiert, zu klassifizieren.

2. Postalische optische Zeichenerkennungsvorrichtung nach Anspruch 1, wobei der vorgegebene Marker ein Titel eines Namens des Ziels ist.

3. Postsachenverarbeitungssystem aufweisend:
eine Sortierungsmaschine, die konfiguriert ist, Postsachen zu jedem Auslieferungsbereich zu verteilen;
eine Bildabtastvorrichtung, die konfiguriert ist, ein Bild des Bereichs zu erzeugen, wo das Ziel der Postsache angegeben ist;
eine Postadresse-Datenbank, die konfiguriert ist, Adresszeichenfolgen und Adresssortierungsinformation auf eine korrespondierende Weise zu speichern; und
eine postalische optische Zeichenerkennungsvorrichtung nach Anspruch 1 oder 2.

4. Postalisches optisches Zeichenerkennungsverfahren aufweisend:
Erfassen eines Bilds, das Information einer Zieladresse enthält;
Einlesen von Zeichenfolgen aus dem Bild mit einem vorgegebenen Marker, der als eine Referenz dient, und Extrahieren von mehreren Zeilen, die diese Zeichenfolgen zeigen; und
Erzeugen von Kollationsdaten, die Identifizierungsinformation sind, die ein graphisches Merkmal der in dem Bild enthaltenen Zieladresse zeigt, unter Verwendung von Zeichen an vorgegebenen Positionen in jeder Zeile und Positionsinformation jeder der vorgegebenen Positionen in jeder Zeile;
Verwenden der Kollationsdaten, um nach Adresssortierinformation zu suchen, die den Kollationsdaten entspricht, und in dem Fall, dass sie gefunden wird, Auslesen und Ausgeben der Adresssortierungsinformation; und
in dem Fall, dass die Adresssortierungsinformation nicht gefunden wird, Registrieren der erzeugten Kollationsdaten und der Adresssortierungsinformation, die der in dem Bild enthaltenen Zielinformation entspricht, auf eine korrespondierende Weise,
und wobei das Verfahren aufweist:
- Wählen des ersten Worts und des letzten Worts jeder Zeile der Zeilen eines Textes,
- Wählen des ersten Zeichens jedes der gewählten Wörter,
- Finden von Koordinateninformation eines vorgegebenen Punkts in jedem der gewählten Zeichen, und
- Klassifizieren einer durch Verbinden der vorgegebenen Punkte zu einem Gestaltmuster gebildeten Figur, die das graphische Merkmal definiert.

5. Computerprogrammprodukt, aufweisend von einem Computer abzuarbeitende Befehle zum Durchführen des Verfahrens von Anspruch 4.

## Revendications

1. Dispositif de reconnaissance optique de caractères postaux comprenant :
une portion de génération de données de regroupement configurée pour acquérir une image incluant des informations d'une adresse de destination ; lire des chaînes de caractères depuis l'image avec un marqueur prédéterminé servant de référence et extraire une pluralité de lignes que ces chaînes de caractères représentent ; et générer des données de regroupement qui sont des informations d'identifiant représentant une caractéristique graphique de l'adresse de destination incluse dans l'image en utilisant des caractères à des positions prédéterminées dans chaque ligne et des informations de position de chacune des positions prédéterminées dans chaque ligne ;
une portion de regroupement configurée pour utiliser les données de regroupement pour rechercher des informations de tri d'adresse correspondant aux données de regroupement et, dans le cas où elles sont trouvées, lire les informations de tri d'adresse et les délivrer ; et
une portion d'enregistrement configurée pour, dans le cas où les informations de tri d'adresse ne sont pas trouvées, enregistrer les données de regroupement que la portion de génération de données de regroupement a générées et les informations de tri d'adresse correspondant aux informations de destination incluses dans l'image de manière correspondante,
et dans lequel la portion de génération de données de regroupement (10) est configurée pour :
- sélectionner le premier mot et le dernier mot de chaque ligne des lignes d'un texte,
- sélectionner le premier caractère de chaque dit mot sélectionné,
- trouver des informations de coordonnées d'un point prédéterminé dans chacun des caractères sélectionnés, et
- classifier la figure formée par la jonction desdits points prédéterminés dans un motif de forme définissant ladite caractéristique graphique.

2. Dispositif de reconnaissance optique de caractères postaux selon la revendication 1, dans lequel le marqueur prédéterminé est un titre d'un nom de la destination.

3. Système de traitement d'articles postaux comprenant :
une machine de tri configurée pour distribuer des articles postaux dans chaque région de livraison ;
un dispositif de scanner d'imagerie configuré pour générer une image de la région où la destination de l'article postal est donnée ;
une base de données d'adresses postales configurée pour stocker des chaînes de caractères d'adresse et des informations de tri d'adresse d'une manière correspondante ; et
un dispositif de reconnaissance optique de caractères postaux selon la revendication 1 ou 2.

4. Procédé de reconnaissance optique de caractères postaux comprenant :
l'acquisition d'une image incluant des informations d'une adresse de destination ; la lecture de chaînes de caractères depuis l'image avec un marqueur prédéterminé servant de référence et l'extraction d'une pluralité de lignes que ces chaînes de caractères représentent ; et la génération de données de regroupement qui sont des informations d'identifiant représentant une caractéristique graphique de l'adresse de destination incluse dans l'image en utilisant des caractères à des positions prédéterminées dans chaque ligne et des informations de position de chacune des positions prédéterminées dans chaque ligne ;
l'utilisation des données de regroupement pour rechercher des informations de tri d'adresse correspondant aux données de regroupement et, dans le cas où elles sont trouvées, la lecture des informations de tri d'adresse et leur délivrance ; et
dans le cas où les informations de tri d'adresse ne sont pas trouvées, l'enregistrement des données de regroupement générées et des informations de tri d'adresse correspondant aux informations de destination incluses dans l'image de manière correspondante,
et dans lequel le procédé comprend :
- la sélection du premier mot et du dernier mot de chaque ligne des lignes d'un texte,
- la sélection du premier caractère de chaque dit mot sélectionné,
- la découverte d'informations de coordonnées d'un point prédéterminé dans chacun des caractères sélectionnés, et
- la classification d'une figure formée par la jonction desdits points prédéterminés dans un motif de forme définissant ladite caractéristique graphique.

5. Produit de programme informatique comprenant des instructions pour réaliser le procédé selon la revendication 4, lorsqu'elles sont exécutées par un ordinateur.
